# EUROPÄISCHE PATENTSCHRIFT

(11) **EP 2 915 418 B1**
(45) Veröffentlichungstag und Bekanntmachung des Hinweises auf die Patenterteilung: **26.04.2017**
(21) Anmeldenummer: 15401008.6
(22) Anmeldetag: 17.02.2015
(51) Int. Cl.: A01B 79/00, A01D 41/127

(54) **SYSTEM UND VERFAHREN ZUM STEUERN DER FAHRGESCHWINDIGKEIT EINER LANDWIRTSCHAFTLICHEN NUTZMASCHINE**
SYSTEM AND METHOD FOR CONTROLLING THE SPEED OF AN AGRICULTURAL MACHINE
SYSTÈME ET PROCÉDÉ DE COMMANDE DE LA VITESSE D'UN ENGIN AGRICOLE

(30) Priorität: 18.02.2014 DE 102014102027
(43) Veröffentlichungstag der Anmeldung: 09.09.2015
(73) Patentinhaber: Amazonen-Werke H. Dreyer GmbH & Co. KG, 49205 Hasbergen (DE)
(72) Erfinder: Warns, Felix, 26936 Stadtland (DE)

(56) Entgegenhaltungen:
- EP-A1- 1 358 784
- EP-A1- 2 583 842
- DE-C1- 19 604 812

## Beschreibung

Die Erfindung betrifft eine System und ein Verfahren zum Steuern der Fahrgeschwindigkeit einer landwirtschaftlichen Nutzmaschine gemäß Patentanspruchs 1.

Im landwirtschaftlichen Bereich zählt das möglichst positionsgenaue Ausbringen von verschiedenen Gütern auf zu bearbeitenden Flächen zu den wichtigsten Arbeiten. Beispielsweise ist im Bereich von Düngerstreuern eine möglichst positionsgenaue Verteilung von Mineraldünger erwünscht. Häufig wird dazu noch eine Düngekarte verwendet.

Im Bereich von Sämaschinen können beispielsweise ein möglichst gleichmäßiger Abstand von Saatkörnern und eine möglichst positionsgenaue Verteilung der Saatkörner gewünscht sein. Diese Verteilung kann wiederum einer speziellen Karte folgen, die spezifische Gegebenheiten zu bearbeitender Fläche berücksichtigt. Die Sämaschinen oder Düngemaschinen können beispielsweise eine Fahrgeschwindigkeit oder den zurückgelegten Fahrweg des landwirtschaftlichen Nutzfahrzeugs als Regel- oder Führungsgröße verwenden. Dabei ist es bekannt, dass diese Führungsgrößen entweder durch Sensoren erfasst werden, die im Bereich eines auf dem Boden abrollenden Laufrads angeordnet sind oder durch Radarsensoren ermittelt werden, siehe die EP 1 853 105 B1.

Die DE 34 42 150 A1 offenbart, dass bei einer Regeleinrichtung für Sämaschinen eine Wegstrecken- und Fahrgeschwindigkeitsmessung durchgeführt werden kann, indem ein Laufrad der Sämaschine als Wegstreckenmesseinrichtung benutzt wird, wobei an dem Rahmen der Sämaschine ein REED-Schalter und an der Felge des Laufrades zwei diametral gegenüberliegende Magnetschalter angeordnet sind, wodurch durch Zählung der Pulse aus dem REED-Schalter in Verbindung mit dem Magneten die zurückgelegte Wegstrecke pro Zeiteinheit bzw. die tatsächliche Fahrgeschwindigkeit der Sämaschine ermittelt wird. Die DE 34 42 150 A1 nennt das Problem, dass dieses Verfahren sehr ungenau sein kann, weil an einem Laufrad Schlupf auftreten kann, wodurch eine genaue Wegstreckenmessung erschwert wird oder gar nicht möglich wird. Dieses Problem tritt besonders bei höheren Geschwindigkeiten auf.

Die DE 30 42 057 A1 offenbart die Ermittlung der absoluten Fahrgeschwindigkeit eines Traktors/Schleppers mit Hilfe eines am Traktor angeordneten Radarsensors. Dieser ermittelt die absolute Fahrgeschwindigkeit des Traktors relativ zum Boden. Die EP 0 502 995 B1 offenbart, dass als Wegsensor ein Radimpulsgeber oder alternativ ein Radarimpulsgeber vorgesehen sein kann.

EP 1 358 784 A1 offenbart ein weiteres System / Verfahren mit den Merkmalen bzw. der Oberbegriffe der Ansprüche 1 und 8. Die oben verwendeten Lösungen haben jedoch das Problem, dass insbesondere bei höheren Fahrgeschwindigkeiten ein vom Bodenrad abgeleitetes Geschwindigkeitssignal ungenau sein kann, weil dabei Schlupf auftreten kann. Bei kleinen Fahrgeschwindigkeiten kann jedoch ein von einem Radarsensor abgeleitetes Signal ungenau sein, da der Radarsensor eine bestimmte Ansprechzeit hat, die auch Totzeit, die auch Totzeit genannt wird, die insbesondere beim Anlaufen der Maschine entstehen kann.

Angesichts der oben beschriebenen Probleme ist es Aufgabe der vorliegenden Erfindung, die Präzision der Fahrgeschwindigkeitsermittlung für landwirtschaftlichen Nutzmaschinen zu erhöhen, und zwar insbesondere über den gesamten Fahrgeschwindigkeitsbereich, in dem die landwirtschaftliche Nutzmaschine Anwendung findet.

Diese Aufgabe wird durch ein System zum Steuern der Fahrgeschwindigkeit einer landwirtschaftlichen Nutzmaschine gemäß Patentanspruch 1 sowie ein entsprechendes Verfahren zum Steuern der Fahrgeschwindigkeit einer landwirtschaftlichen Nutzmaschine gemäß Patentanspruch 8 gelöst.

Die Erfindung stellt ein System zum Steuern einer Fahrgeschwindigkeit einer landwirtschaftlichen Nutzmaschine bereit, umfassend: Mittel zur Erfassung einer ersten Fahrgeschwindigkeit v₁ der landwirtschaftlichen Nutzmaschine durch Kontaktaufbau zum Boden, auf dem die landwirtschaftliche Nutzmaschine fährt, insbesondere ein Laufrad/Bodenrad mit einem Induktionssensor; Mittel zur Erfassung einer zweiten Fahrgeschwindigkeit v₂ der landwirtschaftlichen Nutzmaschine über einen oder mehrere anderen Maschinen vorgesehene, berührungslose Sensoren, insbesondere einen Radarsensor und/oder einen GPS-Sensor; Mittel zum Bestimmen einer gültigen Fahrgeschwindigkeit, v_{G}, auf der Basis der erfassten v₁ und v₂.

Die Mittel zur Erfassung einer ersten Fahrgeschwindigkeit v1 dienen der Erfassung der Fahrgeschwindigkeit der landwirtschaftlichen Nutzmaschine durch Kontaktaufbau zum Boden. Die landwirtschaftliche Nutzmaschine fährt auf dem Boden und ein Laufrad oder Bodenrad hat Kontakt mit dem Boden und dreht sich bei der Bewegung der landwirtschaftlichen Nutzmaschine über die Bodenfläche. Mittels eines Induktionssensors können durch Induktion bei Drehung des Rades Induktionspulse gemessen werden und die zurückgelegte Wegstrecke pro Zeiteinheit bzw. die tatsächliche Fahrgeschwindigkeit ermittelt werden. Die Mittel zur Erfassung einer zweiten Fahrgeschwindigkeit v₂ der landwirtschaftlichen Nutzmaschine können einen oder mehrere Sensoren umfassen, die die Fahrgeschwindigkeit berührungslos, d. h. insbesondere ohne Kontakt zum Boden, messen können. Dabei können ein Radarsensor und/oder ein Ultraschallsensor und/oder ein GPS-Sensor Anwendung finden. Somit stehen zwei ermittelte Fahrgeschwindigkeiten v₁ und v₂ im Wesentlichen gleichzeitig zur Verfügung. Die Mittel zum Bestimmen einer gültigen Fahrgeschwindigkeit v_{G} berücksichtigen die beiden zur Verfügung stehenden, erfassten Fahrgeschwindigkeiten und bestimmen daraus eine gültige Fahrgeschwindigkeit v_{G}. Das Bereitstellen von zwei ermittelten Fahrgeschwindigkeiten ermöglicht es, eine für die aktuelle Fahrsituation, d. h. die Fahrgeschwindigkeit der landwirtschaftlichen Nutzmaschine geeignete gültige Fahrgeschwindigkeit zu bestimmen, und somit die Präzision der Fahrgeschwindigkeitsbestimmung zu erhöhen. Mit anderen Worten: es kann entschieden werden, welche Quelle für die Erfassung der Fahrgeschwindigkeit gewählt werden soll, entsprechend der Fahrsituation der Maschine.

In dem System umfassen die Mittel zum Bestimmen einer gültigen Fahrgeschwindigkeit v_{G} eine Steuereinheit, wobei die Steuereinheit ausgebildet ist, zum Vergleichen eines vordefinierten, programmierbaren Schwellenwertes, v_{S}, jeweils mit den Fahrgeschwindigkeiten v₁ und v₂, und ausgebildet ist zum Setzen der gültigen Fahrgeschwindigkeit v_{G} = v₁, falls das Ergebnis des Vergleichs v₁ kleiner als v_{S} liefert, anderenfalls zum Setzen der gültigen Fahrgeschwindigkeit v_{G} = v₂, falls das Ergebnis des Vergleiches v₁ größer oder gleich v_{S} liefert. Die Steuereinheit kann eine geeignete CPU oder Kontrolleinheit umfassen. Die Steuereinheit kann durch einen Nutzer programmiert werden. Dabei kann ein vordefinierter programmierbarer Schwellenwert v_{S} einprogrammiert werden. Anstelle eines Schwellenwertes kann auch ein Schwellenbereich einprogrammiert werden. Der Schwellenwert kann beispielsweise eine geeignete Grenzfahrgeschwindigkeit definieren, die einen Bereich mit geringen Fahrgeschwindigkeiten von einem Bereich mit höheren Fahrgeschwindigkeiten trennt. Beispielsweise kann ein Bereich von 0 bis 3 km/h einen Langsamfahrbereich der Maschine charakterisieren. Vom Anlaufen der Maschine aus dem Stand bei 0 km/h kann sich ein Bereich für kleine Fahrtgeschwindigkeiten beispielsweise bis zu 3 km/h erstrecken. Es versteht sich, dass dieser Grenzwert auch einen höheren Wert, beispielsweise 5 km/h einnehmen kann. Während bei Fahrgeschwindigkeiten oberhalb des Schwellenwertes eine Erfassung der Fahrgeschwindigkeit durch berührungslose Mittel wie etwa berührungslose Radarsensoren oder Ultraschallsensoren oder GPS-Sensoren genauer sein kann, kann der Bereich der kleinen Fahrgeschwindigkeiten durch Mittel zur Erfassung einer Fahrgeschwindigkeit mittels Kontaktaufbau zum Boden besser abgedeckt werden. Da beide Fahrgeschwindigkeiten v₁ und v₂ im Wesentlichen gleichzeitig ermittelt werden und somit im Wesentlichen gleichzeitig zur Verfügung stehen, kann die Steuereinheit durch Vergleichen mit dem Schwellenwert auswählen, welche Fahrgeschwindigkeit als gültige Fahrgeschwindigkeit weiterverarbeitet werden soll. Dabei kann beispielsweise zunächst mit der Fahrgeschwindigkeit v₁ verglichen werden, die durch den Kontakt mit dem Boden ermittelt wird. Diese Fahrgeschwindigkeit würde bei geringen oder sehr geringen Fahrgeschwindigkeiten die genauere Größe liefern. Überschreitet die so ermittelte Fahrgeschwindigkeit jedoch den vorgegebenen Schwellenwert, wird stattdessen die zweite Fahrgeschwindigkeit v₂ genommen, die mit Hilfe berührungsloser Sensoren ermittelt wird, welche bei höheren Fahrgeschwindigkeiten eine größere Präzision aufweisen.

In der System kann die Steuereinheit ferner ausgebildet sein zum Verarbeiten der gültigen Fahrgeschwindigkeit v_{G} für eine oder mehrere Regelgrößen der landwirtschaftlichen Nutzmaschine, die in Abhängigkeit von v_{G} regelbar sind, beispielsweise eine Drehzahl eines Dosiermotors und/oder eine Leistung eines Antriebsmotors.

Wenn die gültige Fahrgeschwindigkeit v_{G} durch die Steuereinheit bestimmt ist, kann eine Führungsgröße oder Regelgröße auf der Basis der gültigen Fahrgeschwindigkeit v_{G} ermittelt werden. Dabei kann die Drehzahl eines Dosiermotors beispielsweise für Dünger verändert werden. Ebenso kann auch die Leistung eines Antriebsmotors geregelt werden, etwa um die Fahrgeschwindigkeit der Maschine zu verändern.

In dem System können die Mittel zur Erfassung von v₁ und die Mittel zur Erfassung von v₂ und die Steuereinheit über ISOBUS kommunizieren.

Damit können die beteiligten Geräte über ein standardisiertes Kommunikationsprotokoll kommunizieren. Dieses Protokoll wurde speziell für die Vernetzung von landwirtschaftlichen Nutzmaschinen wie etwa Traktoren, Anhängern, Implementen und der dazu gehörigen Software entwickelt und ist nach ISO 11783 standardisiert. Außerdem ist ISOBUS ein sehr robustes Protokoll und verfügt über robuste Hardware.

In dem System, wie oben beschrieben, kann die Steuereinheit eine Traktor Electronic Control Unit, T-ECU, umfassen.

Ein T-ECU ist ein zentraler Steuercomputer, der auf einer landwirtschaftlichen Nutzmaschine, insbesondere auf einem Traktor/Schlepper, angebracht wird.

In dem System kann die Steuereinheit ferner ausgebildet sein, im Falle eines Ausfalles oder einer Störfunktion des Mittels zur Erfassung von v₁ oder des Mittels zur Erfassung von v₂, die erfasste Fahrgeschwindigkeit des ungestörten Systems zu verarbeiten und/oder eine manuelle Eingabe eines Benutzers zur Anwahl des Systems abzufragen.

Hierdurch kann eine Rückfallebene bei einem Teilausfall oder einer Störung eines der Systeme bereitgestellt werden. Die Steuereinheit kann vorab durch den Benutzer so eingestellt werden, dass sie im Falle eines Ausfalles oder einer Störfunktion auf das ungestörte, nicht betroffene System umschaltet. Alternativ oder zusätzlich kann auch eine Eingabe eines Benutzers abgefragt werden, beispielsweise welches System zur Fahrgeschwindigkeitsbestimmung verwendet werden soll. Es versteht sich, dass in diesem Zusammenhang auch entsprechende Warnsignale an den Benutzer gegeben werden können.

Die Erfindung umfasst ferner eine landwirtschaftliche Nutzmaschine, beispielsweise einen Traktor, insbesondere mit angelenktem Anbaugerät oder einer Sämaschine, welche ein System wie oben beschrieben umfasst.

Die Erfindung stellt ferner ein Verfahren zum Steuern einer Fahrgeschwindigkeit einer landwirtschaftlichen Nutzmaschine bereit. Das Verfahren umfasst: Erfassen einer ersten Fahrgeschwindigkeit v₁ der landwirtschaftlichen Nutzmaschine über Kontaktaufbau zum Boden, auf dem die landwirtschaftliche Nutzmaschine fährt; Erfassen einer zweiten Fahrgeschwindigkeit v₂ der landwirtschaftlichen Nutzmaschine über einen oder mehrere an der Maschine vorgesehene, berührungslose Sensoren, insbesondere einen Radarsensor und/oder einen GPS-Sensor; und Bestimmen einer gültigen Fahrgeschwindigkeit v_{G} auf der Basis der erfassten v₁ und v₂.

Die Vorteile des Verfahrens zum Steuern einer Fahrgeschwindigkeit in der landwirtschaftlichen Nutzmaschine wurden bereits anhand des entsprechenden Systems oben beschrieben.

Das Bestimmen der gültigen Fahrgeschwindigkeit umfasst in dem Verfahren: Vergleichen eines vordefinierten, programmierbaren Schwellenwertes v_{S} jeweils mit den Fahrgeschwindigkeiten v₁ und v₂; Setzen der gültigen Fahrgeschwindigkeit v_{G} = v₁; falls das Ergebnis des Vergleichs v₁ kleiner als v_{S} liefert, anderenfalls Setzen der gültigen

Fahrgeschwindigkeit v_{G} = v₁; falls das Ergebnis des Vergleichs v₁ kleiner als v_{S} liefert, anderenfalls Setzen der gültigen Fahrgeschwindigkeit v_{G} = v₂, falls das Ergebnis des Vergleichs v₁ größer oder gleich v_{S} liefert.

Das Verfahren kann ferner umfassen: Verarbeiten der gültigen Fahrgeschwindigkeit v_{G} für eine oder mehrere Regelgrößen der landwirtschaftlichen Nutzmaschine, beispielsweise Drehzahl eines Dosiermotors und/oder Leistung eines Antriebsmotors.

Ferner stellt die Erfindung eine Vorrichtung zum Nachrüsten einer bereits vorhandenen landwirtschaftlichen Nutzmaschine mit einem System bereit, das System, wie oben beschrieben, zum Steuern einer Fahrgeschwindigkeit einer landwirtschaftlichen Nutzmaschine.

In diesem Zusammenhang ist auch eine Teilnachrüstung möglich. Beispielsweise können bereits bestehende landwirtschaftlichen Nutzmaschinen, die über eine Fahrgeschwindigkeitserfassung mit Hilfe eines Radarsensors oder Ultraschallsensors oder GPS-Sensors verfügen, auf einfache und preiswerte Weise mit einem zusätzlichen Mittel zur Fahrgeschwindigkeitserfassung, z. B. einem Induktionssensor am Bodenrad, ausgerüstet werden, welcher die Erfassung von kleinen Fahrgeschwindigkeiten der landwirtschaftlichen Nutzmaschine deutlich verbessern kann. Eine entsprechende Nachrüstung ist selbstverständlich auch möglich, falls an einer vorhandenen landwirtschaftlichen Nutzmaschine nur eine Fahrgeschwindigkeitsermittlung mittels einer Kontaktnahme mit dem Boden vorhanden ist, beispielsweise über ein Bodenrad. In diesem Fall können Radarsensoren oder GPS-Sensoren oder eine Kombination von beiden nachgerüstet werden, zusammen mit einer Steuereinheit wie in dem obigen System beschrieben.

Im Folgenden werden Ausführungsformen der Erfindung unter Bezugnahme auf die Figuren beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.
- Fig. 1:: schematische Zeichnung einer landwirtschaftlichen Nutzmaschine, hier Traktor, mit einem Anhänger sowie einem System zur Geschwindigkeitserfassung entsprechend der vorliegenden Erfindung.
- Fig. 2:: Verfahren zur Steuerung der Fahrgeschwindigkeit einer landwirtschaftlichen Nutzmaschine entsprechend der vorliegenden Erfindung.

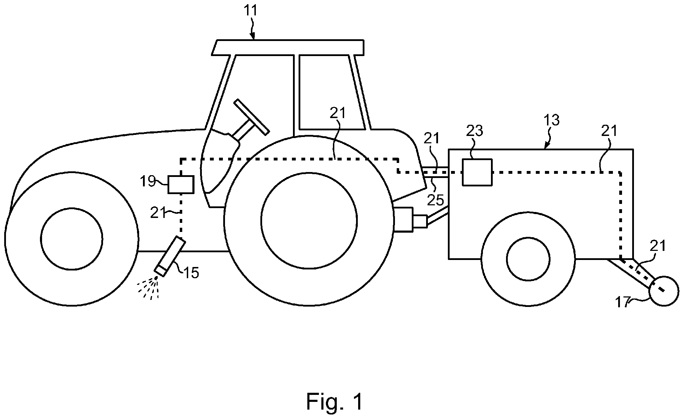

Die Fig. 1 zeigt eine landwirtschaftliche Nutzmaschine 1, welche aus einem Traktor/Schlepper 11 und einem daran angekoppelten Anhänger 13 besteht. Der Anhänger 13 kann eine Düngevorrichtung oder eine Sävorrichtung oder eine Pflugvorrichtung oder andere Anhänger umfassen. Ebenso ist es möglich, statt eines für die Landwirtschaft zu nutzenden Anhängers einen im Bauwesen zu nutzenden Anhänger zu ziehen, Beispiel für Anwendungen im Bereich der Bebauung von Flächen.

Der Anhänger 13 ist über eine Kupplungseinheit 25 mit dem Traktor 11 verbunden. Das landwirtschaftliche Nutzfahrzeug 1 umfasst ein System zur Steuerung der Fahrgeschwindigkeit der landwirtschaftlichen Nutzmaschine. Die landwirtschaftliche Nutzmaschine weist an dem Traktor 11 ein erstes Mittel zur Bestimmung der Fahrgeschwindigkeit auf, das mit dem Bezugszeichen 15 versehen ist. Dabei kann es sich um einen Radarsensor oder Ultraschallsensor handeln, der die Fahrgeschwindigkeit des Traktors 11 und Anhängers 13 berührungslos in Bezug auf den Boden misst. Es können ebenso Kombinationen eines Radarsensors und eines Ultraschallsensors und/oder eines GPS-Sensors verwendet werden. Ein beispielhaft ist am Anhänger 13 ein Bodenrad 17 vorgesehen, das als ein Mittel zur Bestimmung einer Fahrgeschwindigkeit durch Bodenkontakt betrachtet wird. Mittels eines Induktionssensors können bei Drehung des Bodenrades 17 Induktionspulse erzeugt werden, wodurch die Fahrgeschwindigkeit ermittelt werden kann. Es ist ebenso möglich, dieses Mittel zur Fahrgeschwindigkeitsbestimmung direkt am Traktor 11 vorzusehen, insbesondere dann, wenn kein Anhänger 13 verwendet wird. Mittels des Sensors 15 kann eine Fahrgeschwindigkeit v₂ des Traktors 11 ermittelt werden. Diese Art der Bestimmung ist besonders bei höheren Fahrgeschwindigkeiten des Traktors 11 bzw. der landwirtschaftlichen Nutzmaschine sehr genau und zuverlässig. Umgekehrt kann mittels des Bodenrades/Laufrades 17 eine Fahrgeschwindigkeit v₁ des landwirtschaftlichen Nutzfahrzeugs bestimmt werden. Diese Art der Bestimmung ist besonders bei niedrigen Fahrgeschwindigkeiten, etwa unmittelbar nach dem Anfahren der Maschine 1 besonders präzise und genau. Die Bestimmung mittels des Laufrades 17 ist beispielsweise in einem Bereich von 0 bis 5 km/h, insbesondere in einem Bereich von 0 bis 3 km/h, besonders präzise.

Es versteht sich, dass ein oberer Grenzwert v_{S} einstellbar sein kann. Beispielsweise kann es Flächen geben, auf denen die Fahrgeschwindigkeitsbestimmung mit Hilfe eines Laufrades 17 auch noch bei höheren Geschwindigkeiten zuverlässig ist.

Der Traktor 11 weist ferner eine Steuereinheit 19 auf. Der Anhänger 13 weist eine Steuereinheit 23 auf. Es versteht sich, dass sowohl der Traktor 11 als auch der Anhänger 13 eine Steuereinheit haben können. Diese können priorisiert sein. Zumindest einer der beiden Steuereinheiten sollte jedoch vorhanden sein. Die Steuereinheit 19 und/oder 23 können ausgebildet sein, die von den Sensoren 15 und 17 ermittelten Fahrgeschwindigkeiten zu verarbeiten. Insbesondere können die Fahrgeschwindigkeiten v₁ und v₂ mit einem programmierten Schwellwert v_{S} verglichen werden. Die ermittelten Fahrgeschwindigkeiten v₁ und v₂ werden über ein Kommunikationssystem 21 zu den Steuereinheiten 19 und/oder 23 gesendet, so dass dort jeweils beide Werte v₁, und v₂ der ermittelten Fahrgeschwindigkeiten zur Verfügung stehen. Die Steuereinheit 19 und/oder die Steuereinheit 23 kann die Fahrgeschwindigkeiten v₁ und v₂ mit dem Schwellwert vergleichen und kann beispielsweise für niedrige Fahrgeschwindigkeiten v₁ < v_{S} die Geschwindigkeit v₁, also die mittels des Laufrads 17 ermittelte Fahrgeschwindigkeit, als gültige Fahrgeschwindigkeit bestimmen. Umgekehrt kann die Steuereinheit 19 und/oder 17 die Fahrgeschwindigkeit v₂, also die mittels des Radarsensors und/oder Ultraschallsensors und/oder GPS-Sensors ermittelte Fahrgeschwindigkeit als die gültige Fahrgeschwindigkeit bestimmen, wenn v₁ > v_{S} ist. Es versteht sich, dass die obigen Entscheidungen auch durch Vergleich mit v₂ getroffen werden können. Es ist ebenso denkbar, den Mittelwert aus v₁ und v₂ zu bilden, um einen geringeren Fehler im Bereich des Grenzwerts für den Vergleich bereitzustellen.

Die Steuereinheit 19 und/oder 23 kann ferner ausgebildet sein, auf der Basis der gültigen Geschwindigkeit v_{G} eine Regelgröße der landwirtschaftlichen Nutzmaschine 1 zu regeln, etwa die Dosierung von Dünger oder die Verteilung oder das Ablegen von Samen oder aber auch die Fahrgeschwindigkeit der Maschine selbst.

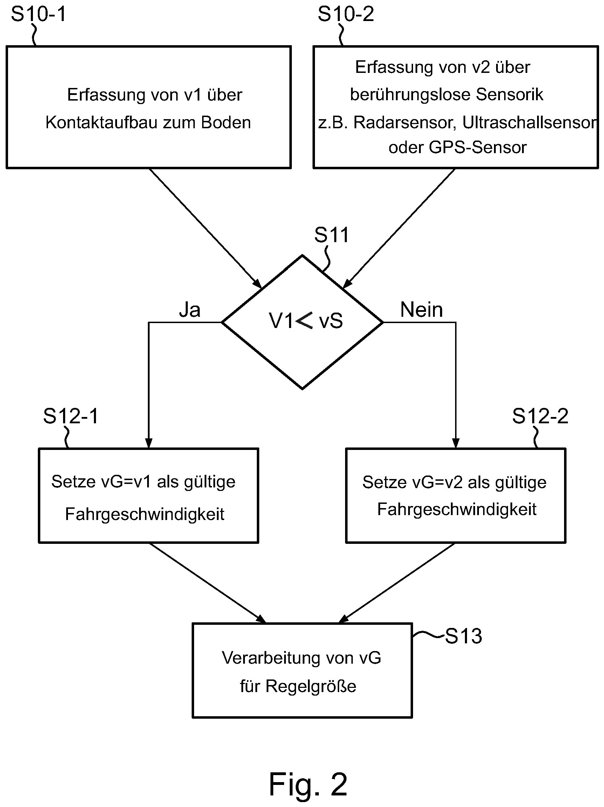

Die Fig. 2 zeigt eine schematische Darstellung des Verfahrens zum Steuern der Fahrgeschwindigkeit einer landwirtschaftlichen Nutzmaschine entsprechend der vorliegenden Erfindung. Im Schritt S10-1 folgt die Fassung von einer Fahrgeschwindigkeit v₁ über Kontaktaufbau zum Boden. Dieser Schritt kann der Erfassung von v₁ durch ein Laufrad entsprechen, wie es anhand von Fig. 1 beschrieben wurde. Der Schritt S10-2 umfasst die Erfassung von v₂ über eine berührungslose Sensorik, z. B. einen Radarsensor, einem Ultraschallsensor oder einem GPS-Sensor. Es versteht sich, dass auch eine Kombination von Sensoren oder mehrere Sensoren eines Typs verwendet werden können. Sobald beide Fahrgeschwindigkeiten vorliegen, können diese mit einem vorgegebenen Schwellwert v_{S} verglichen werden. Im Schritt S11 wird geprüft, ob die ermittelte Fahrgeschwindigkeit kleiner oder größer als der Schwellwert v_{S} ist. Da im Bereich niedriger Fahrgeschwindigkeiten die Ermittlung der Fahrgeschwindigkeit durch v₁ als genauer gilt, wird der Vergleich zunächst auf der Basis der Fahrgeschwindigkeit v₁ durchgeführt. Es ist jedoch ebenso möglich, den Vergleich auf der Basis der Fahrgeschwindigkeit v₂ durchzuführen oder etwa eine Kombination aus v₁ und v₂, beispielsweise ein Mittelwert für den Vergleich heranzuziehen. Falls v₁ < v_{S} gilt, wird im Schritt S12-1 v_{G} = v₁ als gültige Fahrgeschwindigkeit gesetzt. Falls v₁ größer oder gleich v_{S} ist, wird im Schritt S12-2 v_{G} = v₂ als gültige Fahrgeschwindigkeit gesetzt. Abschließend erfolgt im Schritt S13 die Verarbeitung von v_{G} für eine Regelgröße.

Es versteht sich, dass in dieses Verfahren eine Sicherheitsschicht eingebaut werden kann. Falls ein Ausfall eines Systems oder eine Störfunktion gemeldet wird, kann es sein, dass v₁ oder v₂ nicht oder nicht rechtzeitig ermittelt werden können. Für diesen Fall kann die entsprechende Vorrichtung den Fehlerzustand signalisieren. Es kann der Benutzer angefragt werden, ob das verbliebene System als gültiges System für die Fahrgeschwindigkeitermittlung verwendet werden soll. Alternativ kann das System auch so eingestellt werden, dass automatisch die ungestörte Größe für die Ermittlung der Fahrgeschwindigkeit verwendet wird. Es gilt also: die landwirtschaftliche Nutzmaschine 1 kann eigenständig entscheiden, welche Geschwindigkeitsquelle gewählt werden soll, eine kontaktbasierende oder eine berührungslose Geschwindigkeitsquelle. Diese Entscheidung kann dadurch beeinflusst werden, dass im kleineren Fahrgeschwindigkeitsbereich ein Sensor, beispielsweise ein Induktivsensor mit Kontakt zum Boden über ein Bodenrad/Tragrad/Laufrad an eine präzisere Fahrgeschwindigkeit ermittelt.

Hingegen bei größeren Geschwindigkeiten können Radarsensoren oder GPS-Sensoren oder Ultraschallsensoren die Geschwindigkeiten erfassen, da diese eine schlupffreie Ermittlung der Bewegung ermöglichen. Die Umschaltung kann automatisch gesteuert werden. Bei Ausfällen oder Störfunktionen eines der Systeme kann eine Rückfallebene bereitgestellt werden.

Ebenso ist es relativ kostengünstig, bestehende Baugruppen mit einer kontaktbasierten Regelerfassung nachzurüsten, insbesondere im Zuge der Verwendung von ISOBUS als Busstandard kann eine Modularisierung des Systems garantiert werden.

## Patentansprüche

1. System zum Steuern einer Fahrgeschwindigkeit einer landwirtschaftlichen Nutzmaschine (1) umfassend:
Mittel (17) zur Erfassung einer ersten Fahrgeschwindigkeit v₁ der landwirtschaftlichen Nutzmaschine (1) durch Kontaktaufbau zum Boden, auf dem die landwirtschaftliche Nutzmaschine (1) fährt, insbesondere ein Laufrad/Bodenrad mit einem Induktionssensor;
Mittel (15) zur Erfassung einer zweiten Fahrgeschwindigkeit v₂ der landwirtschaftlichen Nutzmaschine (1) über einen oder mehrere an der landwirtschaftlichen Nutzmaschine (1) vorgesehene, berührungslose Sensoren, insbesondere einen Radarsensor und/oder einen GPS-Sensor;
Mittel zum Bestimmen einer gültigen Fahrgeschwindigkeit, v_{G}, auf der Basis der erfassten v₁ und v₂.
**dadurch gekennzeichnet, dass**
die Mittel zum Bestimmen einer gültigen Fahrgeschwindigkeit v_{G} eine Steuereinheit (23) umfassen, wobei die Steuereinheit (23) ausgebildet ist zum Vergleichen eines vordefinierten, programmierbaren Schwellenwertes, v_{S}, jeweils mit den Fahrgeschwindigkeiten v₁ und v₂; und ausgebildet ist zum Setzen der gültigen Fahrgeschwindigkeit v_{G}=v₁; falls das Ergebnis des Vergleiches v₁ kleiner als v_{S} liefert, anderenfalls zum Setzen der gültigen Fahrgeschwindigkeit v_{G} = v₂, falls das Ergebnis des Vergleiches v₁ größer oder gleich v_{S} liefert.

2. System gemäß Anspruch 1, wobei die Steuereinheit (23) ausgebildet ist zum Verarbeiten der gültigen Fahrgeschwindigkeit v_{G} für eine oder mehrere Regelgrößen der landwirtschaftlichen Nutzmaschine (1), die in Abhängigkeit von v_{G} regelbar sind, beispielsweise eine Drehzahl eines Dosiermotors und/oder eine Leistung eines Antriebsmotors.

3. System gemäß wenigstens einem der Ansprüche 1 oder 2, wobei die Mittel (17) zur Erfassung von v₁ und die Mittel (15) zur Erfassung von v₂ und die Steuereinheit (23) über ISOBUS (21) kommunizieren.

4. System gemäß Anspruch 3, wobei die Steuereinheit (23) eine Traktor Electronic Control Unit (19), T-ECU, umfasst.

5. System gemäß wenigstens einem der Ansprüche 1 - 4, wobei die Steuereinheit (23) ferner ausgebildet ist, im Falle eines Ausfalles oder einer Störfunktion des Mittel zur Erfassung von v₁ oder des Mittels zur Erfassung von v₂, die erfasste Fahrgeschwindigkeit des ungestörten Systems zu verarbeiten und/oder eine manuelle Eingabe eines Benutzers zur Anwahl des Systems abzufragen.

6. Landwirtschaftliche Nutzmaschine (1), beispielsweise Traktor (11) insbesondere mit angelenktem Anbaugerät oder Sämaschine (13), umfassend ein System gemäß wenigstens einem der Ansprüche 1 - 5.

7. Landwirtschaftliche Nutzmaschine (1) gemäß Anspruch 6 *mit einem angelenkten Anbaugerät oder Sämaschine (13),* wobei das angelenkte Anbaugerät oder die Sämaschine (13) mit einer ECU mit dem ISOBUS der Steuereinheit (23) verbunden sind.

8. Verfahren zum Steuern einer Fahrgeschwindigkeit einer landwirtschaftlichen Nutzmaschine (1) umfassend:
Erfassen einer ersten Fahrgeschwindigkeit v₁ der landwirtschaftlichen Nutzmaschine (1) über Kontaktaufbau zum Boden, auf dem die landwirtschaftliche Nutzmaschine (1) fährt;
Erfassen einer zweiten Fahrgeschwindigkeit v₂ der landwirtschaftlichen Nutzmaschine (1) über einen oder mehrere an der landwirtschaftlichen Nutzmaschine (1) vorgesehene, berührungslose Sensoren, insbesondere einen Radarsensor und/oder einen GPS-Sensor;
Bestimmen einer gültigen Fahrgeschwindigkeit, v_{G}, auf der Basis der erfassten v₁ und v₂.
**dadurch gekennzeichnet, dass**
das Bestimmen der gültigen Fahrgeschwindigkeit umfasst:
Vergleichen eines vordefinierten, programmierbaren Schwellenwertes, v_{S}, jeweils mit den Fahrgeschwindigkeiten v₁ und v₂;
Setzen der gültigen Fahrgeschwindigkeit v_{G} = v₁; falls das Ergebnis des Vergleiches v₁ kleiner als v_{S} liefert, anderenfalls Setzen der gültigen Fahrgeschwindigkeit v_{G} = v₂, falls das Ergebnis des Vergleiches v₁ größer oder gleich v_{S} liefert.

9. Verfahren gemäß Anspruch 8, ferner umfassend:
Verarbeiten der gültigen Fahrgeschwindigkeit v_{G} für eine oder mehrere Regelgrößen der landwirtschaftlichen Nutzmaschine (1), beispielsweise Drehzahl eines Dosiermotors und/oder Leistung eines Antriebsmotors.

10. Verfahren zum Steuern einer Fahrgeschwindigkeit einer landwirtschaftlichen Nutzmaschine, umfassend das Nachrüsten der landwirtschaftlichen Nutzmaschine (1) mit einem System zum Steuern einer Fahrgeschwindigkeit einer landwirtschaftlichen Nutzmaschine (1), das System gemäß wenigstens einem der Ansprüche 1-5.

## Claims

1. System for controlling a speed of an agricultural machine (1), comprising:
means (17) for detecting a first speed V₁ of the agricultural machine (1) by building up contact with the ground on which the agricultural machine (1) is travelling, in particular a running wheel/ground wheel with an induction sensor;
means (15) for detecting a second speed v₂ of the agricultural machine (1) by means of one or more contactless sensors, in particular a radar sensor and/or a GPS sensor, provided on the agricultural machine (1);
means for determining a valid speed, V_{G}, on the basis of the detected speeds v₁ and v₂,
**characterized in that** the means for determining a valid speed v_{G} comprise a control unit (23), wherein the control unit (23) is designed to compare a predefined programmable threshold value, v_{S}, in each case with the speeds v₁ and v₂; and is designed to set the valid speed v_{G} = v₁; if the result of the comparison supplies v₁ as less than v_{S,} otherwise setting the valid speed v_{G} = v₂ if the result of the comparison supplies v₁ as being greater than or equal to v_{S}.

2. System according to Claim 1, wherein the control unit (23) is designed to process the valid speed V_{G} for one or more control variables of the agricultural machine (1) which can be controlled as a function of v_{G}, for example a rotational speed of a metering motor and/or a power level of a drive motor.

3. System according to at least one of Claims 1 or 2, wherein the means (17) for detecting v₁ and the means (15) for detecting v₂ and the control unit (23) communicate via ISOBUS (21).

4. System according to Claim 3, wherein the control unit (23) comprises a tractor electronic control unit (19), T-ECU.

5. System according to at least one of Claims 1-4, wherein the control unit (23) is also designed to process, in the case of a failure or a disrupted function of the means for detecting v₁ or the means for detecting v₂, the detected speed of the non-disrupted system and/or to interrogate manual input of a user for the selection of the system.

6. Agricultural machine (1), for example tractor (11), in particular with an attachment or a sowing machine (13) which is connected in an articulated fashion, comprising a system according to at least one of Claims 1-5.

7. Agricultural machine (1) according to Claim 6 having an attachment or a sowing machine (13) which is connected in an articulated fashion, wherein the attachment or the sowing machine (13) which is connected in an articulated fashion is connected to an ECU by means of the ISOBUS of the control unit (23).

8. Method for controlling a speed of an agricultural machine (1), comprising:
detecting a first speed v₁ of the agricultural machine (1) by building up contact with the ground on which the agricultural machine (1) is travelling;
detecting a second speed v₂ of the agricultural machine (1) by means of one or more contactless sensors, in particular a radar sensor and/or a GPS sensor, which are provided on the agricultural machine (1);
determining a valid speed, v_{G}, on the basis of the detected speeds v₁ and v₂,
**characterized in that**
the determination of the valid speed comprises:
comparing a predefined programmable threshold value, v_{S}, in each case with the speeds v₁ and v₂;
setting the valid speed v_{G} = v₁; if the result of the comparison supplies v₁ as being less than v_{S}, otherwise setting the valid speed v_{G} = v₂ if the result of the comparison v₁ is greater than or equal to v_{S}.

9. Method according to Claim 8, also comprising:
processing the valid speed v_{G} for one or more control variables of the agricultural machine (1), for example rotational speed of a metering motor and/or power level of a drive motor.

10. Method for controlling a speed of an agricultural machine, comprising retrofitting the agricultural machine (1) with a system for controlling a speed of an agricultural machine (1), this being the system according to at least one of Claims 1-5.

## Revendications

1. Système destiné à la commande d'une vitesse de conduite d'une machine utilitaire agricole (1) comprenant :
- des moyens (17) destinés à la détection d'une première vitesse de conduite v₁ de la machine utilitaire agricole (1) par l'intermédiaire d'une structure en contact avec le sol sur lequel circule la machine utilitaire agricole (1), en particulier une roue porteuse et/ou une roue au sol avec un capteur inductif ;
- des moyens (15) destinés à la détection d'une deuxième vitesse de conduite v₂ de la machine utilitaire agricole (1) par l'intermédiaire d'un ou de plusieurs capteurs sans contact prévus au niveau de la machine utilitaire agricole (1), en particulier un capteur radar et/ou un capteur GPS ;
- des moyens destinés à la détermination d'une vitesse de conduite valide v_{G}, sur la base des vitesses de conduite v₁ et v₂ saisies,
**caractérisé en ce que**
les moyens destinés à la détermination d'une vitesse de conduite valide v_{G} comprennent une unité de commande (23), où l'unité de commande (23) est conçue en vue de la compensation d'une valeur de seuil vₛ prédéfinie et programmable, respectivement avec les vitesses de conduite v₁ et v₂ ; et où l'unité de commande est conçue en vue de l'établissement de la vitesse de conduite valide v_{G} = v₁ si le résultat de la comparaison fournit une vitesse de conduite v₁ inférieure à la valeur de seuil v_{S}; dans le cas contraire, où l'unité de commande est conçue en vue de l'établissement de la vitesse de conduite valide v_{G} = v₂ si le résultat de la comparaison fournit une vitesse de conduite v₁ supérieure à la valeur de seuil v_{S}.

2. Système selon la revendication 1, selon lequel l'unité de commande (23) est conçue en vue du traitement de la vitesse de conduite valide v_{G} pour une ou plusieurs variables de contrôle de la machine utilitaire agricole (1) qui peuvent être paramétrées en fonction de la vitesse de conduite valide v_{G}, par exemple une vitesse de rotation d'un moteur de dosage et/ou une puissance d'un moteur d'entraînement.

3. Système selon au moins l'une des revendications 1 ou 2, selon lequel les moyens (17) destinés à la détection de la vitesse de conduite v₁ et les moyens (15) destinés à la détection de la vitesse de conduite v₂, ainsi que l'unité de commande (23) communiquent par l'intermédiaire d'un système ISOBUS (21).

4. Système selon la revendication 3, selon lequel l'unité de commande (23) comprend une unité de commande électronique pour tracteur (19), dénommée T-ECU.

5. Système selon au moins l'une des revendications 1 à 4, selon lequel l'unité de commande (23) est en outre conçue, dans le cas d'une défaillance ou d'un dysfonctionnement des moyens destinés à la détection de la vitesse de conduite v₁ ou des moyens destinés à la détection de la vitesse de conduite v₂, pour traiter la vitesse de conduite détectée du système en parfait état de fonctionnement et/ou pour interroger une saisie manuelle d'un utilisateur en vue de la sélection du système.

6. Machine utilitaire agricole (1), par exemple un tracteur (11), en particulier avec un dispositif d'attelage articulé ou une machine à ensemencer (13), comprenant un système selon au moins l'une des revendications 1 à 5.

7. Machine utilitaire agricole (1) selon la revendication 6 avec un dispositif d'attelage articulé ou une machine à ensemencer (13), selon laquelle le dispositif d'attelage articulé ou la machine à ensemencer (13) est relié(e) au système ISOBUS de l'unité de commande (23) par l'intermédiaire d'un système ECU.

8. Procédé destiné à la commande d'une vitesse de conduite d'une machine utilitaire agricole (1) comprenant :
- la détection d'une première vitesse de conduite v₁ de la machine utilitaire agricole (1) par l'intermédiaire d'une structure en contact avec le sol sur lequel circule la machine utilitaire agricole (1) ;
- la détection d'une deuxième vitesse de conduite v₂ de la machine utilitaire agricole (1) par l'intermédiaire d'un ou de plusieurs capteurs sans contact prévus au niveau de la machine utilitaire agricole (1), en particulier un capteur radar et/ou un capteur GPS ;
- la détermination d'une vitesse de conduite valide v_{G} sur la base des vitesses de conduite v₁ et v₂ saisies, **caractérisé en ce que**
la détermination de la vitesse de conduite valide v_{G} comprend :
- la comparaison d'une valeur de seuil vₛ prédéfinie et programmable, respectivement avec les vitesses de conduite v₁ et v₂ ;
- l'établissement de la vitesse de conduite valide v_{G} = v₁ si le résultat de la comparaison fournit une vitesse de conduite v₁ inférieure à la valeur de seuil v_{S}; dans le cas contraire, l'établissement de la vitesse de conduite valide v_{G} = v₂ si le résultat de la comparaison fournit une vitesse de conduite v₁ supérieure à la valeur de seuil v_{S}.

9. Procédé selon la revendication 8, comprenant en outre :
le traitement de la vitesse de conduite valide v_{G} pour une ou plusieurs variables de contrôle de la machine utilitaire agricole (1), par exemple la vitesse de rotation d'un moteur de dosage et/ou la puissance d'un moteur d'entraînement.

10. Procédé destiné à la commande d'une vitesse de conduite d'une machine utilitaire agricole, comprenant la mise en place des extensions sur la machine utilitaire agricole (1) avec un système destiné à la commande d'une vitesse de conduite d'une machine utilitaire agricole (1), lequel système étant conçu selon au moins l'une des revendications 1 à 5.
